# EUROPEAN PATENT APPLICATION

(11) **EP 4 685 079 A1**
(43) Date of publication of application: **28.01.2026**
(21) Application number: 24190079.4
(22) Date of filing: 22.07.2024
(51) Int. Cl.: B65D 83/48

(54) **AIR SPRING ACTUATOR**

(71) Applicant: Ecospenser Technologies BV, 9090 Melle (BE)
(72) Inventor: DE CUYPER, Dirk, 9090 Melle (BE)
(74) Representative: Eeckhaoudt, Sabine Maria A.

(57) **Abstract**

The present invention provides a plastic aerosol valve assembly (1), comprising a plastic mounting cup (3) and a plastic plunger (4), wherein said plastic mounting cup (3) and said plastic plunger (4) have a stepwise tubular housing (5, 6), wherein said stepwise tubular housing of the plastic plunger is slideably disposed in the stepwise tubular housing of the plastic mounting cup thereby providing an airtight compartment (7) with compressible air, which when in use provide an air spring movement. The invention also provides a container from metal of plastic provided with an air spring actuator according to the invention, a method for manufacturing of the air spring actuator and a method of assembly.

## Description

### TECHNICAL FIELD

The present invention relates to handheld and hand operated spray dispensing devices. The invention particularly provides an all-plastic spray head. This is advantageous for recycling. The inventive spray head can be provided to fit to a metal or plastic container. The inventive spray head may be used on containers with pressurized content, particularly on containers wherein compressed air is stored in a separate compartment inside or attached to said container. The inventive spray head has a pump mechanism based on the compression of air. It is named an air spring actuator.

### BACKGROUND

Spray devices are well-known. They have a spray head connectable to a separate dispenser container containing a product to be dispensed. The spray head can work with a "trigger" which is hand operated and used to operate a pump in the spray device. The pump draws product from the container and dispenses it through a nozzle via a liquid flow path. Even though many spray device designs have been developed and many found commercial use, there are drawbacks.

A disadvantage of many spray devices is the use of a metal pump or trigger return spring, typically in the form of a metal coil spring. Nowadays there is a demand for packaging wherein the parts are made of the same material, all plastic or all metal. The efficient metal spring element is difficult to replace by a plastic element. Plastic can have a memory effect and may not return to its original state upon repeated use. Plastic materials may also show deformation over a long period of time which may result in a rupture. This behavior is known as creep.

Hence, further improvements are desirable. There remains a need in the art for a all-plastic spray head with reliable spray pump mechanism.

### SUMMARY OF THE INVENTION

Against this background, the invention provides a plastic aerosol valve assembly, comprising a plastic mounting cup and a plastic plunger, wherein said plastic mounting cup and said plastic plunger have a stepwise tubular housing, wherein said stepwise tubular housing of the plastic plunger is slideably disposed in the stepwise tubular housing of the plastic mounting cup thereby providing an airtight compartment with compressible air, which when in use provide an air spring movement.

Further improvements are provided in the dependent claims.

The present invention also provides in a method for manufacturing said plastic aerosol valve assembly and in a method for assembly of a spray device comprising said plastic aerosol valve assembly.

### BRIEF DESCRIPTION OF THE FIGURES

Figure 1 is a graphic representation of a plastic aerosol valve assembly according to an embodiment of the invention, in non-active condition wherein the spray head is not actuated and the path for fluid transport and dispensing is closed.

Figure 2 is a graphic representation of a plastic aerosol valve assembly according to an embodiment of the invention, in preloaded condition wherein the spray head is partly depressed and the air in the actuator compartment is being compressed.

Figure 3 is a graphic representation of a plastic aerosol valve assembly according to an embodiment of the invention, in active condition wherein the spray head is actuated, the air in the actuator compartment is compressed, and the path for fluid transport and dispensing is closed. Upon release of the actuator, the air spring mechanism will move the actuator back towards the closed position.

Figure 4 is a three dimensional graphic representation of a plastic aerosol valve assembly according to an embodiment of the invention, in inactive condition wherein the spray head is not actuated and the path for fluid transport and dispensing is closed.

Figure 5 is a three dimensional graphic representation of a plastic aerosol valve assembly according to an embodiment of the invention, in preloaded condition wherein the spray head is partly depressed and the air in the actuator compartment is being compressed.

Figure 6 is a three dimensional graphic representation of a plastic aerosol valve assembly according to an embodiment of the invention, in active condition wherein the spray head is actuated, the air in the actuator compartment is compressed, and the path for fluid transport and dispensing is closed. Upon release of the actuator, the air spring mechanism will move the actuator back towards the closed position.

### DETAILED DESCRIPTION OF THE INVENTION

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings: "A", "an", and "the" as used herein refers to both singular and plural referents unless the context clearly dictates otherwise. By way of example, "a compartment" refers to one or more than one compartment. "About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed. "Comprise," "comprising," and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein. The recitation of numerical ranges by endpoints includes all numbers and fractions subsumed within that range, as well as the recited endpoints.

In a first aspect, the invention provides a plastic aerosol valve assembly, comprising a plastic mounting cup and a plastic plunger, wherein said plastic mounting cup and said plastic plunger have a stepwise tubular housing, wherein said stepwise tubular housing of the plastic plunger is slideably disposed in the stepwise tubular housing of the plastic mounting cup thereby providing an airtight compartment with compressible air, which when in use provide an air spring movement.

Airtightness is preferably provided by protrusions on a surface of the stepwise tubular housing of the plastic plunger. The protrusions abut the surface of the stepwise tubular housing of the plastic mounting cup and seal off the compartment.

In a preferred embodiment the plastic aerosol valve assembly comprises in combination said plastic mounting cup, said plastic plunger, a plastic plunger support, a plastic actuator. Preferably the aerosol valve assembly is an all-plastic device. This is beneficial for recycling the device.

The plastic aerosol valve assembly according to an embodiment of the invention has a plastic mounting cup that is provided with means for attachment to a container. The container, when in use, will hold a pressurized gas (propellant) and a product to be dispensed. The means for attachment to the container may be a cover provided with a screw thread to fit on a container with a complementary screw thread. Alternative the means for attachment provide for a press fit or click fit for combination with said container.

The plastic valve cup has an open upper end and an open lower end between which a stepwise tubular housing extends.

The plastic plunger is slidably received in said stepwise tubular housing of said plastic mounting cup. The plastic plunger has an open upper end and a closed lower end between which a stepwise tubular housing is extending.

The assembly of said plastic plunger in said plastic mounting cup provides two compartments which are changeable in volume upon sliding movement of the plastic plunger inside the plastic mounting cup. This is obtainable by adjusting the stepwise tubular housing by adjusting the length and diameter of the different sections (steps) in the stepwise tubular housing.

The plastic plunger support is form-matchingly taken up in the stepwise tubular housing of the plastic plunger. The plastic plunger support has an open upper end and a closed lower end between which a tubular housing is extending.

The plastic mounting cup has a first fluid connection positioned in the tubular housing wall close to the open lower end of the plastic mounting cup. The plastic plunger has a second fluid connection positioned in the tubular housing wall approximate to the closed lower end of the plastic plunger. Both fluid connections are connected and connect into the tubular housing of the plastic plunger support. A channel is thereby formed for receipt and transportation of the product to be dispensed.

In addition, the plastic actuator is assembled to said open upper end of said plastic plunger support. The plastic actuator has a tube-like element with open ends connected to the aforementioned channel for receipt and transportation of product when in use.

The plastic aerosol valve assembly is provided such that upon actuation of the plastic actuator the plastic plunger support and the plastic plunger slidably move towards the open end of the plastic plunger support. The first and second fluid opening are thereby moved through the open lower end of the plastic mounting cup thereby opening the plastic aerosol valve assembly for receipt and transportation of the product.

In use, an air spring movement is acting upon the plastic actuator. The air spring movement moves the actuator back into a non-actuated position when the plastic actuator is released.

The stepwise tubular housing has at least three parts of different diameter. The stepwise part located closest to the plastic actuator has the largest diameter. The stepwise part located closest to the lower end of the plastic mounting cup has the smallest diameter.

In a preferred embodiment, said stepwise tubular housing of said plastic plunger is provided with protrusion, which in use upon slideably moving said stepwise tubular housing of said plastic plunger inside said stepwise tubular housing ot said plastic mounting cup provide airtightness.

In a preferred embodiment, said mounting cup is provided for engagement with a screwthread on an opening of said container thereby closing off said container in use.

In a preferred embodiment, said mounting cup comprises a pressfit or clickfit for combination with said container.

Preferably, said aerosol valve assembly is constructed so that a bag-on-valvesystem or a piston system can be applied to said valvehousing.

In a preferred embodiment, said plastic plunger support and said plastic plunger are produced with 2K-injection moulding. The plastic plunjer is preferably provided from a soft material, whereas the plastic plunger support material is preferably hard.

In a second aspect, the invention provides a method of producing the plastic aerosol valve assembly according to an embodiment of the invention, wherein said plastic plunger suport and said plastic plunger are provided by 2K-injection moulding.

In a further aspect, the invention provides a plastic aerosol container provided for holding pressurized product when in use, comprising a plastic container and fitted thereon the plastic aerosol valve assembly according to an embodiment of the invention.

In a final aspect, the invention provides a method for assembly of a plastic aersol valve assembly and a container for holding and dispensing a pressurized product, when in use, comprising the step of welding said plastic aerosol valve assembly to said container; preferably by laser welding or ultrasonic welding.

Preferably the following materials are used for construction of the plastic aerosol valve assembly: actuator head of polypropylene, or polyethylene. Cap for the actuator head is preferably of a hard material such as high density polyethylene, polyethylene, polypropylene. The plastic plunjger support is preferably from a hard material such as polypropylene. The plastic plunger is preferably from a softer material than the plunger support, for example thermoplastic elastomer, abbreviated TPE. The container is preferably made from polyester, preferably PET. The cap fit on the actuator and container using a screwfit, pressfit, clickfit.

### EXAMPLES

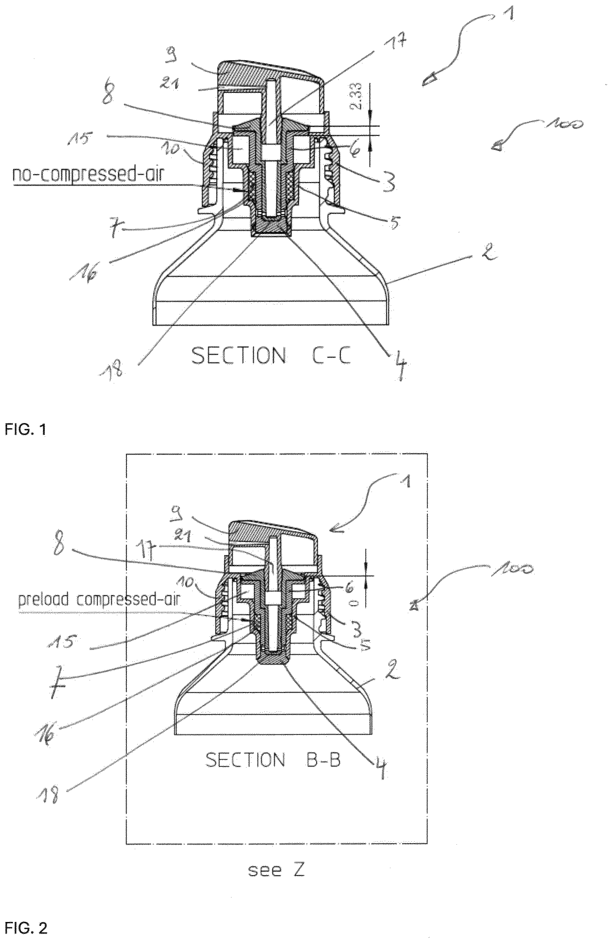

**Figure 1** is a graphic representation of a plastic aerosol valve assembly **1** according to an embodiment of the invention, in non-active condition wherein the spray head **9** is not actuated and the path for fluid transport and dispensing is closed. Depicted in Fig. 1 is a plastic aerosol valve assembly **1,** comprising a plastic mounting cup **3** and a plastic plunger **4,** wherein said plastic mounting cup **3** and said plastic plunger **4** have a stepwise tubular housing **5, 6,** wherein said stepwise tubular housing of the plastic plunger **5** is slideably disposed in the stepwise tubular housing of the plastic mounting cup **6** thereby providing an airtight compartment **7** with compressible air, which when in use provide an air spring movement. The plastic aerosol valve assembly **1,** comprises in combination said plastic mounting cup **3,** said plastic plunger **4,** a plastic plunger support **8,** a plastic actuator **9,** and said plastic mounting cup **3** having means for attachment to a container **10,** holding when in use, a pressurized gas (propellant) and a product to be dispensed, said plastic valve cup **3** having an open upper end **11** and an open lower end **12** between which a stepwise tubular housing is extending, said plastic plunger **4** slidably received in said stepwise tubular housing of said plastic mounting cup **3,** said plastic plunger **4** having an open upper end **13** and a closed lower end **14** between which a stepwise tubular housing is extending, wherein the assembly of said plastic plunger **4** in said plastic mounting cup **3** provides two compartments **15, 16** which are changeable in volume upon sliding movement of the plastic plunger **4** inside the plastic mounting cup **3,** said plastic plunger support **8** form-matchingly taken up in said stepwise tubular housing of said plastic plunger **4,** said plastic plunger support **8** having an open upper end **17** and a closed lower end **18** between which a tubular housing is extending, said plastic mounting cup **3** and said plastic plunger **4** having a first **19** and second **20** fluid connection positioned in the wall of the tubular housing close to the respective open and closed lower ends, whereby both fluid connections **19, 20** are connected and connect into the tubular housing of the plastic plunger support **8** thereby forming a channel for receipt and transportation of said product to be dispensed, said plastic actuator **9** assembled to said open upper end **17** of said plastic plunger support **8,** wherein said plastic actuator has a tube-like element with open ends connected to said channel, for receipt and transportation of said product when in use, wherein upon actuation of said plastic actuator **9** said plastic plunger support **8** and said plastic plunger **4** slidably move towards the open end of said plastic plunger support **8,** thereby moving said first **19** and second **20** fluid opening through said open lower end **12** of said plastic mounting cup **3** thereby opening said plastic aerosol valve assembly 1 for receipt and transportation of said product, wherein an air spring movement acting upon said plastic actuator **9** is provided when in use the actuator **9** is actuated thereby moving the actuator **9** back into a non-actuated position when the plastic actuator **9** is released. A protrusion **21, 22** is provided for airtight sealing of the compartment holding air for comrpession and air spring movement. The plastic aerosol valve assembly is positioned on top of a container **2** and attached to the container **2** with a screw thread **10.** Together they provide a plastic aerosol container **100.**
**Figure 2** provides the same embodiment as in Fig. 1 with the difference that the plastic valve assembly is in pre-loaded condition.

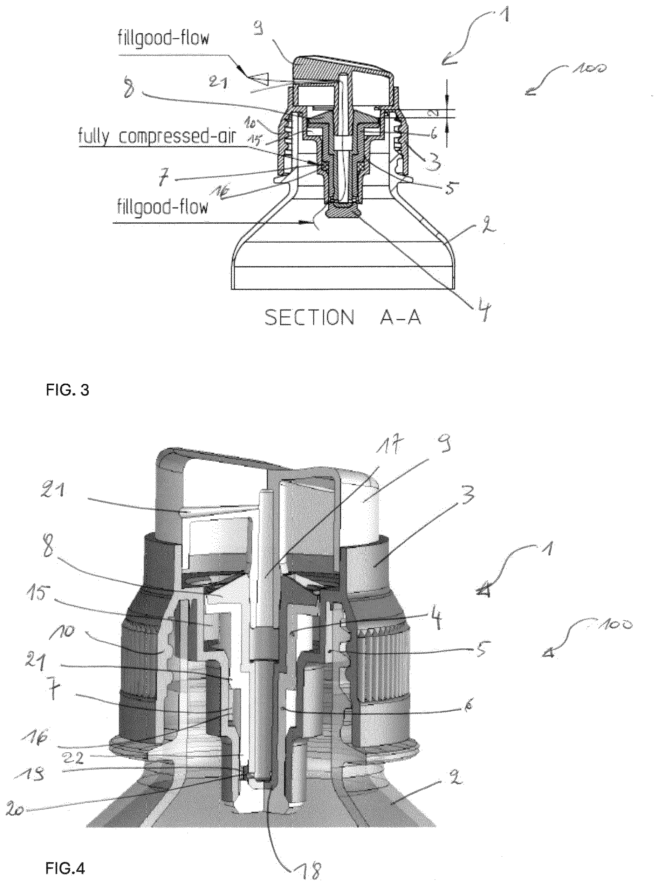

**Figure 3** provides the same embodiment as in Fig. 1 and 2 with the difference that the plastic valve assembly is in active condition.

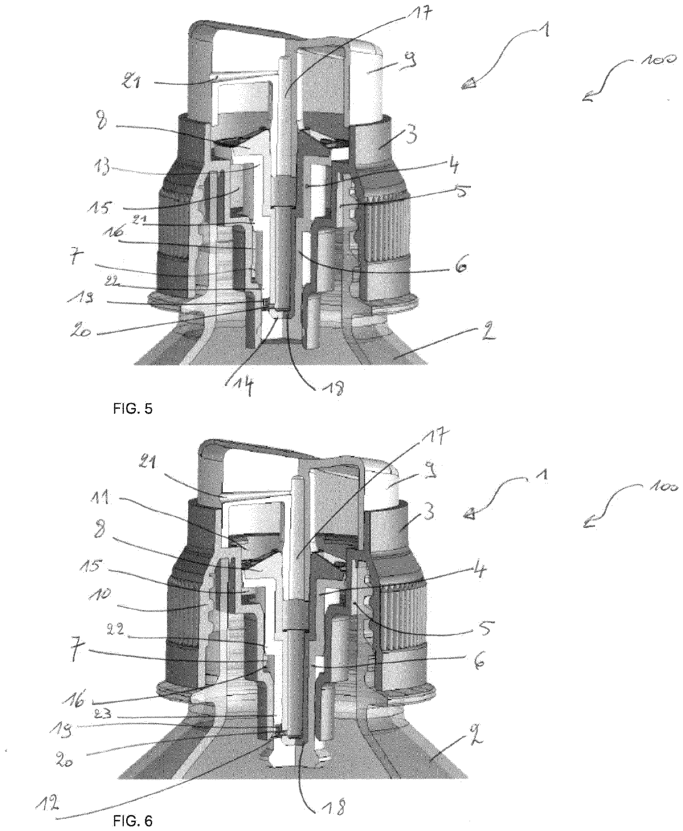

**Figures 4-6** provide the same embodiment as in Figs. 1-3 in the form of a three-dimensional representation.

The exemplified plastic aerosol valve assembly is provided to be attached to a container with screw thread **10** on top of the container **2.** A person skilled in the art will understand that other attachment means are feasible.

## Claims

1. A plastic aerosol valve assembly (1), comprising a plastic mounting cup (3) and a plastic plunger (4), wherein said plastic mounting cup (3) and said plastic plunger (4) have a stepwise tubular housing (5, 6), wherein said stepwise tubular housing of the plastic plunger (6) is slideably disposed in the stepwise tubular housing of the plastic mounting cup (5) thereby providing an airtight compartment (7) with compressible air, which when in use provide an air spring movement.

2. The plastic aerosol valve assembly (1) according to claim 1, comprising in combination said plastic mounting cup (3), said plastic plunger (4), a plastic plunger support (8), a plastic actuator (9), and
(a) said plastic mounting cup (3) having means (10) for attachment to a container (2), holding when in use, a pressurized gas (propellant) and a product to be dispensed, said plastic mounting cup (3) having an open upper end (11) and an open lower end (12) between which a stepwise tubular housing is extending,
(b) said plastic plunger (4) slidably received in said stepwise tubular housing (5) of said plastic mounting cup (3), said plastic plunger (4) having an open upper end (13) and a closed lower end (14) between which a stepwise tubular housing is extending, wherein the assembly of said plastic plunger (4) in said plastic mounting cup (3) provides two compartments (15, 16) which are changeable in volume upon sliding movement of the plastic plunger (4) inside the plastic mounting cup (3),
(c) said plastic plunger support (8) form-matchingly taken up in said stepwise tubular housing of said plastic plunger (4), said plastic plunger support (8) having an open upper end (17) and a closed lower end (18) between which a tubular housing is extending,
(d) said plastic mounting cup (3) and said plastic plunger (4) having a first (19) and second fluid connection (20) positioned in the wall of the tubular housing close to the respective open and closed lower ends, whereby both fluid connections (19, 20) are connected and connect into the tubular housing of the plastic plunger support (8) thereby forming a channel for receipt and transportation of said product to be dispensed (arrow in Fig 3),
(e) said plastic actuator (9) assembled to said open upper end (17) of said plastic plunger support (8), wherein said plastic actuator (9) has a tube-like element (21) with open ends connected to said channel, for receipt and transportation of said product when in use,
(f) wherein upon actuation of said plastic actuator (9) said plastic plunger support (8) and said plastic plunger (4) slidably move towards the open end of said plastic plunger support (8), thereby moving said first (19) and second (20) fluid opening through said open lower end (12) of said plastic mounting cup (3) thereby opening said plastic aerosol valve assembly (1) for receipt and transportation of said product,
(g) wherein an air spring movement acting upon said plastic actuator (9) is provided when in use the plastic actuator (9) is actuated, and air is compressed thereby moving the plastic actuator (9) back into a non-actuated position when the plastic actuator (9) is released and air compression is released.

3. The plastic aerosol valve assembly (1) according to claim 1 or 2, wherein said stepwise tubular housing of said plastic plunger is provided with protrusion, which in use upon slideably moving said stepwise tubular housing of said plastic plunger inside said stepwise tubular housing ot said plastic mounting cup provide airtightness.

4. The plastic aerosol valve assembly (1) according to any of claims 1 to 3, wherein said mounting cup is provided for engagement with a screwthread on an opening of said container thereby closing off said container in use.

5. The plastic aerosol valve assembly (1) according to any of claims 1 to 3, wherein said mounting cup comprises a pressfit or clickfit for combination with said container.

6. The plastic aerosol valve assembly (1) according to any of claims 1 to 5, wherein said aerosol valve assembly is constructed so that a bag-on-valvesystem or a piston system can be applied to said valvehousing.

7. The plastic aerosol valve assembly (1) according to any of claims 1 to 6, wherein said plastic plunger support and said plastic plunger are produced with 2K-injection moulding.

8. The plastic aerosol valve assembly (1) according to any of claims 1 to 7, wherein a protrusion (21, 22) is provided for airtight sealing.

9. A method of producing the plastic aerosol valve assembly (1) according to any of claims 1 to 7, wherein said plastic plunger suport and said plastic plunger are provided by 2K-injection moulding.

10. A plastic aerosol container (100) provided for holding pressurized product when in use, comprising a plastic container (2) and fitted thereon a plastic aerosol valve assembly (1) according to any of claims 1 to 7.

11. A method for assembly of a plastic aerosol container (100) comprising the step of providing a plastic aerosol valve assembly (1) according to any of claims 1 to 7, welding said plastic aerosol valve assembly (1) to a container (2); preferably by laser welding or ultrasonic welding.
